# EUROPEAN PATENT APPLICATION

(11) **EP 2 019 350 A2**
(43) Date of publication of application: **28.01.2009**
(21) Application number: 08011931.6
(22) Date of filing: 02.07.2008
(51) Int. Cl.: G06F 1/16, H04N 5/64

(54) **Flat screen assembly and method to assemble a flat screen**

(30) Priority: 25.07.2007 CN 200720121588 U
(71) Applicant: Shenzhen TCL New Technology Ltd., Nanshan District Shenzhen Guangdong 518067 (CN)
(72) Inventor: Huerre, Dominique, 92360 Meudon la Forêt (FR); Orcil, Bertrand, 49800 La Bohalle (FR); Evenisse, Michel, 49140 Fontaine-Milon (FR)
(74) Representative: Frese-Göddeke, Beate

(57) **Abstract**

A known flat screen assembly comprises a flat screen panel, e.g. a LCD panel, a housing with at least a back cover and a front cover and with connection means comprising screws. To improve the aesthetical appearance of the assembly, especially to avoid an uneven surface of the front cover, the invention proposes to insert elastically deformable washers between the screws and the housing.

## Description

### BACKGROUND OF THE INVENTION

### FIELD OF THE INVENTION

The present invention is related to a flat screen assembly according to the preamble of claim 1. Flat screen assemblies which comprise flat screens and housings are used for computers and TV apparatuses. The invention is also related to a method to assemble such a flat screen.

### DESCRIPTION OF THE PRIOR ART

A display apparatus with a display device and a cabinet, which comprises a rear part and a front part and also fastening means for fastening the front part to the rear part, is described by the WO 03/063476 A1. The fastening means of the cabinet comprises pairs of cooperating members of the front part and the rear part. At least one of the cooperating pairs has a resilient member, which is manually accessible and can be disengaged from its cooperating member. After being disengaged the front part and the rear part are separable. The cooperating members, of at least one of the pairs, are snap-ins. The display device is mounted in the cabinet and must be connected to the cabinet with additional connection means. As a result, numerous members, of the fastening means to fasten the cabinet itself, and of the connection means to fasten the display device into the cabinet, are necessary.
It is well known in the art to fix a back cover of a flat screen assembly to a front cover by screws, whereby the screws are screwed at a defined torque which is also determined by the mounting equipment. The result of this torque is a high axial tension in the screw and a torque in a receiving part for the screw. These forces are transmitted especially into the front cover resulting in aesthetical defects in the region of the screws like depressions in the surface. Especially if the front cover has a high gloss surface that defects disturb the impression and by that the value of the display device.

### SUMMARY OF THE INVENTION

It is therefore desirable to improve a flat screen assembly according to the preamble of claim 1, with respect to aesthetical aspects. Defects on the front cover resulting from axial forces caused by the screws should be avoided.

According to the invention this can be achieved by the features of claim 1.

A flat screen assembly of the invention comprises a flat screen panel and a housing with at least a back cover and a front cover and with connection means comprising screws. An elastically deformable washer is arranged between the housing and a head of each screw. Normally the screws are fixed in respective bushes formed on the inside of the front cover, whereby the shaft of each screw is put through a respective hole in the back cover. The screws are screwed with a defined torque which is determined mainly by the assembling machinery and accordingly is the same as known in the art. By that the spring washers are compressed at a maximum. According to the invention the screws are unscrewed for a predefined factor of turns in a final step. By that only the force of the spring washers act via the shaft on the front cover. No aesthetical defects will occur resulting in a high value appearance of the flat screen assembly.

The same arguments apply accordingly to the method claim.

In a preferred embodiment the elastically deformable washer is a conical helical spring. This spring may be easily manufactured from a wire having a circular cross section. When compressed by screwing the screw at the normal torque the spring is flat like a ring so that unintentional deforming of the spring is avoided. As a result of the different diameters at the ends of the spring there is a safe support on the back cover as well as on the head of the screw.

In an alternative embodiment the elastically deformable washer is a helical spring. This spring is made e.g. from a flat material.

In an other embodiment the elastically deformable washer comprises two metal rings between which a resilient material is fixed.

The last two embodiments are easy to handle because no care must be paid to the orientation of insertion.

### BRIEF DESCRIPTION OF THE DRAWINGS

The invention will be explained in more detail using a preferred embodiment, which is illustrated in the drawings.

It shows:
Figure 1, a cut of a part of a flat screen assembly during a first assembling stage and
Figure 2, a cut of the part of the flat screen assembly of figure 1 after a second assembling stage.

### DETAILED DESCRIPTION OF A PREFERRED EMBODIMENT OF THE INVENTION

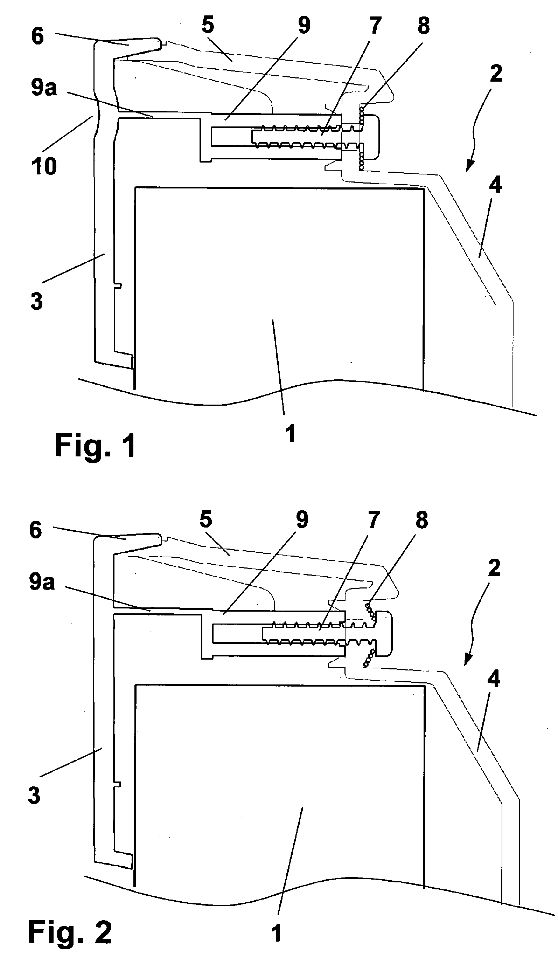

As seen in figures 1 and 2 a flat screen assembly of a preferred embodiment of the invention comprises a flat screen panel 1, for example a LCD panel, an OLED panel or a plasma panel, and a housing with at least a back cover 2 and a front cover 3. The arrangement of all three parts is seen in a partial view of a cross section.

The cavity-shaped back cover 2 comprises a bottom 4 and four side walls 5. The bottom 4 covers the rear of the LCD panel 1 and some further components, which are arranged at the rear of the LCD panel 1. The front cover 3 is shaped like a frame. An outer end 6 of the front cover 3 fits with the corresponding side walls 5 of the back cover 2.

The back cover 2 is fixed to the front cover 3 by a plurality of screws 7. Each screw is provided with an elastically deformable washer 8 in the form of a conical helical spring, which is inserted onto the shank of the screw 7 near to a head part, a base of the spring having a smaller diameter being adjacent the head. Each screw 7 is screwed into a bush-like part 9 of the front cover 3, the part 9 extending from an inner side of the front cover 3 towards the back cover 2. The part 9 may include a rib 9a arranged between the inner side of the front cover and the bush to reduce the contact area between the part 9 and the front cover 3. The front cover 3 and the part 9 are manufactured in one piece.

Opposite to a free end of each part 9 a hole is provided in the back cover 2. The screw 7 penetrates the hole. By that the washer 8 is situated between the head of the screw 7 and an outer side of the back cover 2.

For assembling the flat screen assembly the screen panel 1 is put between the back cover 2 and the front cover 3 as known in the art. The screws 7 including the washers 8 put on them are inserted into the holes and screwed into the parts 9 at a defined maximum torque. By that there is a relative high axial tension and a torque in each of the parts 9 and of the ribs 9a. As a result depressions 10 appear on the surface of the front cover 3 opposite of the parts 9. In order to remove these depressions 10 by relaxing the torque and the axial force the screws are unscrewed for a predefined number of turns. The number must not be a natural number. It depends on the maximum torque, the lead of the screws and the spring characteristic and can be determined by simple tests.

## Claims

1. A flat screen assembly comprising
a flat screen panel (1) and
a housing with at least a back cover (2) and a front cover (3) and with connection means comprising screws (7), **characterized in that** an elastically deformable washer (8) is arranged between the housing and a head of each screw (7).

2. A flat screen assembly according to claim 1 **characterized in that** the elastically deformable washer (8) is a conical helical spring.

3. A flat screen assembly according to claim 1 **characterized in that** the elastically deformable washer (8) is a helical spring.

4. A flat screen assembly according to claim 1 **characterized in that** the elastically deformable washer (8) comprises two metal rings between which a resilient material is fixed.

5. A method to assemble a flat screen, where a flat screen panel (1) is mounted into a housing and where a back cover (2) of the housing is connected to a front cover (3) of the housing, the connection comprising screws (7), **characterized in that** elastically deformable washers (8) are inserted between heads of the screws (7) and the housing, that the screws (7) are screwed to a predefined maximum torque and that the screws (7) finally are unscrewed for a predefined number of turns.
